Europäisches Patentamt

European Patent Office

Office européen des brevets

(19)

(11) Veröffentlichungsnummer : **0 343 202 B1**

(12) **EUROPÄISCHE PATENTSCHRIFT**

(45) Veröffentlichungstag der Patentschrift :
**03.06.92 Patentblatt 92/23**

(51) Int. Cl.$^5$ : **H02M 1/08,** H02M 5/257

(21) Anmeldenummer : **88909201.1**

(22) Anmeldetag : **27.10.88**

(86) Internationale Anmeldenummer :
**PCT/DE88/00664**

(87) Internationale Veröffentlichungsnummer :
**WO 89/05056 01.06.89 Gazette 89/12**

(54) **ANSTEUERSCHALTUNG FÜR TRIACS.**

(30) Priorität : **23.11.87 DE 3739623**

(43) Veröffentlichungstag der Anmeldung :
**29.11.89 Patentblatt 89/48**

(45) Bekanntmachung des Hinweises auf die
Patenterteilung :
**03.06.92 Patentblatt 92/23**

(84) Benannte Vertragsstaaten :
**DE FR GB IT NL SE**

(56) Entgegenhaltungen :
**DE-B- 2 403 097**
**US-A- 3 676 706**

(73) Patentinhaber : **ROBERT BOSCH GMBH**
**Postfach 30 02 20**
**W-7000 Stuttgart 30 (DE)**

(72) Erfinder : **HORNUNG, Friedrich**
**Am Ochsenwald 10 A**
**W-7000 Stuttgart 80 (DE)**
Erfinder : **VOGT, Hans-Joachim**
**Pfarrhausstr. 51**
**W-7000 Stuttgart 80 (DE)**

EP 0 343 202 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Stand der Technik

Die Erfindung bezieht sich auf eine gleichspannungsgesteuerte Ansteuerschaltung für Triacs gemäß dem Oberbegriff des Hauptanspruchs.

Zur Leistungssteuerung von Verbrauchern an Wechselstromnetzen werden in zunehmenden Maße Triacs eingesetzt. Triacs erlauben den Vollwellenbetrieb der Verbraucher mit Phasenanschnitt auf einfachste Weise, da nur ein Leistungsbauelement benötigt wird. Bei einem bestimmten Winkel jeder Halbwelle muß dabei der Triac gezündet werden.

Schaltungen die zur Zündung des Triacs geeignete Zündimpulse erzeugen, sind in großer Zahl bekannt und erfordern einen unterschiedlichen Aufwand an Bauelementen. Eine Anordnung zur Phasenanschnittssteuerung ist aus der DE-OS 24 03 097 bekannt. Mit der bekannten Ansteuerschaltung wird der Strom zum Aufladen des Ladekondensators dadurch variabel eingestellt, daß - in Abhängigkeit von der Steuergleichspannung - der Widerstand des Drain-Source-Kanals ($r_{DS}$) veränderbar ist. Zur Ankoppelung der Halbwellen werden in einer Brükkenschaltung zum Feldeffekt-Transistor zwei Widerstände benutzt, die zur Symmetrierung der Stromflußwinkel der positiven und negativen Halbwelle dienen.

Ungünstig ist, daß für die bekannte Ansteuerschaltung verhältnismäßig viele Bauteile notwendig sind, die einerseits den Aufwand und Platzbedarf und andererseits das Zuverlässigkeitsrisiko erhöhen.

Vorteile der Erfindung

Die erfindungsgemäße Schaltungsanordnung mit den kennzeichnenden Merkmalen des Hauptanspruchs hat demgegenüber den Vorteil, daß der Bauteilebedarf erheblich reduziert wird und daß dadurch der Fertigungsaufwand und die Kosten der Schaltungsanordnung sinken. Weiterhin können in vorteilhafter Weise Sperrschicht-Feldeffekt-Transistoren (JFET) oder Isolierschicht-Feldeffekt-Transistoren (MOSFET) verwendet werden, die preisgünstig und betriebssicher sind.

Durch die in den Unteransprüchen aufgeführten Maßnahmen sind vorteilhafte Weiterbildungen und Verbesserungen der im Hauptanspruch angegebenen Schaltungsanordnung möglich. Besonders vorteilhaft ist, daß bei MOSFET-Transistoren das Gate elektrisch vom Kanal isoliert ist und man deswegen in der Wahl der Potentiale zwischen Steuer- und Schaltkreis freizügiger verfahren kann.

Zeichnung

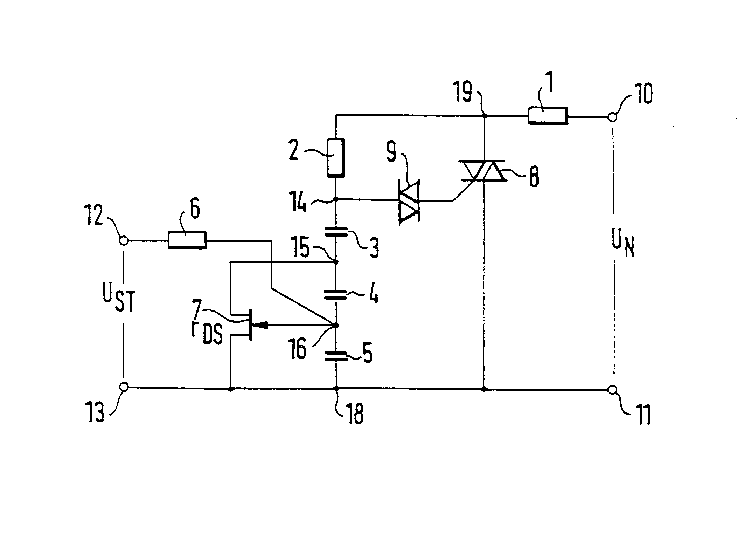

Ein Ausführungsbeispiel der Erfindung ist in der Zeichnung dargestellt und in der folgenden Beschreibung näher erläutert.

Beschreibung des Ausführungsbeispiels

Eine Netzspannung $U_N$ liegt an den Klemmen 10 und 11, die über einen Verbraucher 1 mit der Laststrecke des Triac 8 verbunden ist. Parallel zu dieser Laststrecke liegt eine Reihenschaltung, die aus dem Ladewiderstand 2 und den Kondensatoren 3, 4 und 5 gebildet wird. Die Knotenpunkte 18 und 19 bilden jeweils den Verbindungspunkt zum Triac 8. Der Knotenpunkt 14, der zwischen dem Ladewiderstand 2 und dem Ladekondensator 3 liegt, ist über den Diac 9 mit dem Gate des Triac 8 verbunden. Weiterhin ist der zwischen den Kondensatoren 3 und 4 liegende Knotenpunkt 15 an das eine Ende des Drain-Source-Kanals eines Feldeffekt-Transistors 7 angeschlossen, während das andere Ende mit dem Knotenpunkt 18 verbunden ist. An den Knotenpunkt 16, der aus dem gemeinsamen Anschluß der Kondensatoren 4 und 5 gebildet wird, ist das Gate des Feldeffekt-Transistors 7 angeschlossen. Gleichzeitig wird diesem Knotenpunkt 16 die Steuerspannung $U_{ST}$ über den Vorwiderstand 6 von der Klemme 12 zugeführt. Die Steuerspannung $U_{ST}$ wird an den Klemmen 12 und 13 eingespeist.

Im folgenden wird die Wirkungsweise dieser Schaltungsanordnung beschrieben.

In der Sperrphase des Triac 8, d.h. zu Beginn jeder Netzhalbwelle, wird der Ladekondensator 3 über den Ladewiderstand 2 und der Kombination aus den Kondensatoren 4 und 5 und dem Kanal des Feldeffekt-Transistors 7 aufgeladen. Erreicht die Summe der Spannungen der Kondensatoren 3, 4 und 5 die Durchbruchspannung des Diac 9, dann wird dieser schlagartig leitend und liefert einen Zündimpuls an das Gate des Triac 8. Der Triac 8 bleibt nun leitend, bis die Halbwelle der Netzspannung wieder 0 Volt erreicht hat. Die Kondensatoren 3, 4 und 5 entladen sich über den Diac 9, den Ladewiderstand 2 und den Triac 8 ebenfalls nahezu vollständig. Mit Beginn der nächsten Netzhalbwelle, bei der der Triac 8 wieder in die Sperrphase übergeht, wiederholt sich der Vorgang mit umgekehrter Polarität, so daß am Triac halbperiodisch Zündimpulse wechselnder Polarität entstehen.

Der Stromflußwinkel des Triac wird durch die Zeit bestimmt, die die Strecke 14 bis 18 bis zum Erreichen der Durchbruchspannung des Diac 9 benötigt. Die Aufladezeit der Kondensatorkette wird beeinflußt durch den Kanalwiderstand $r_{DS}$ des Feldeffekt-Transistors 7. Der Ladestrom selbst ist in jeder Halbwelle gleich, da er nur durch den Ladewiderstand 2 bestimmt wird. Der Kanalwiderstand $r_{DS}$ sorgt für eine unterschiedliche Verteilung des Ladestroms zur Ladekondensator 3 einerseits und die Kondensatoren 4 und 5 andererseits. Beiniederohmigem Kanalwiderstand $r_{DS}$ fließt der größte Teil des Ladestromes über die Drain-Source-Strecke des Feldeffekt-Transistors zum Ladekondensator 3; die Kondensatoren 4 und 5 sind annähernd wirkungslos. Die Durchbruchsspannung des Triac 8 wird zu einem späteren Zeitpunkt erreicht, so daß sich ein kleinerer Stromflußwinkel ergibt. Ist der Kanalwiderstand $r_{DS}$ hochohmig, ergibt sich durch die Reihenschaltung der Kondensatoren 3, 4 und 5 ein kleinerer Kapazitätswert. Die Durchbruchsspannung des Diac 9 wird nun zu einem früheren Zeitpunkt erreicht, so daß sich ein großer Stromflußwinkel ergibt. Bei geeigneter Dimensionierung der Kondensatoren 3, 4 und 5 kann nahezu der gesamte Stromflußwinkelbereich von 0 bis 180° überstrichen werden. Die Kapazität des Ladekondensator 3 ist erheblich größer anzusetzen als die der Kondensatoren 4 und 5. Die Einstellung des Kanalwiderstandes $r_{DS}$ erfolgt über die Gleichspannung $U_{ST}$, die über den Vorwiderstand 6 dem Gate des Feldeffekt-Transistors 7 zugeführt wird. Die Kondensatoren 4 und 5 werden zur Symmetrierung der Gate-Kanal-Spannung des Feldeffekt-Transistors 7 benötigt. Dadurch wird erreicht, daß die wechselnde Polarität der Drain-Source-Spannung bei der positiven und negativen Halbwelle jeweils gleiche Kanalwiderstände $r_{DS}$ erzeugt. In der Figur ist ein n-Kanal-Feldeffekt-Transistor aufgeführt, der mit einer negativen Steuerspannung $U_{ST}$ angesteuert wird. Es ist auch die Verwendung eines P-Kanal-Feldeffekt-Transistors möglich, der mit positiver Steuerspannung $U_{ST}$ versorgt wird. In der erfindungsgemäßen Schaltungsausführung können Feldeffekt-Transistoren verwendet werden, deren Gate gegenüber dem Kanal entweder nicht isoliert (z.B. JFET) oder isoliert (z.b. MOSFET) ist.

Die Schaltungsanordnung ist besonders vorteilhaft geeignet zum Einbau in elektrisch betriebene Handwerkzeuge, da sie preiswert und mit kleiner Bauform hergestellt werden kann.

## Patentansprüche

1. Gleichspannungsgesteuerte Ansteuerschaltung für einen Triac (8), der in Reihe mit einem Lastwiderstand (1) einer Versorgungsspannung ($U_N$) parallel geschaltet ist, mit einer an einen Anschlußpunkt des Triacs angeschlossenen weiteren Reihenschaltung, die einen Ladewiderstand (2) und einen ersten Ladekondensator (3) aufweist, zwischen denen ein Diac (9) angeschlossen ist, dessen anderer Anschluß mit dem Steuereingang des Triac (8) verbunden ist und mit einer mit einem Feldeffekt-Transistor (7) versehenen Steuerschaltung zur Veränderung des Stromflußwinkels des Triac (8), wobei die Steuergleichspannung dem Gate des Feldeffekt-Transistors (7) über einen Vorwiderstand (6) zugeführt ist, dadurch gekennzeichnet, daß in Reihe zum ersten Ladekondensator (3) weitere Kondensatoren (4, 5) geschaltet sind, wobei ein Anschluß dieser Kondensatoren (5) mit dem anderen Anschlußpunkt des Triacs verbunden ist, und daß parallel zu den weiteren Kondensatoren (4, 5) der Drain-Source-Kanal des Feldeffekt-Transistors (7) angeordnet ist, und daß das Gate des Feldeffekt-Transistors (7) zwischen den Kondensatoren (4 und 5) angeschlossen ist.

2. Ansteuerschaltung nach Anspruch 1, dadurch gekennzeichnet, daß der Feldeffekt-Transistor als Sperrschicht-Feldeffekt-Transistor (JFET) oder als Isolierschicht-Feldeffekt-Transistor (MOSFET) ausgebildet ist.

3. Ansteuerschaltung nach Anspruch 1 oder 2, dadurch gekennzeichnet, daß der Ladekondensator (3) wesentlich größer ist als die Reihenschaltung von Kondensatoren (4 und 5).

4. Ansteuerschaltung nach einem der vorhergehenden Ansprüche, dadurch gekennzeichnet, daß die Kondensatoren (4 und 5) in etwa gleich groß sind.

## Claims

1. Direct-voltage-controlled drive circuit for a triac (8) which is connected in parallel with a supply voltage ($U_N$) in series with a load resistor (1), with a further series circuit connected to a connecting point of the triac (8) which exhibits a charging resistor (2) and a first charging capacitor (3) between which is connected a diac (9), the other connection of which is connected to the control input of the triac (8) and with a control circuit, provided with a field-effect transistor (7), for changing the current flow angle of the triac (8), the direct control voltage being supplied to the gate of the field-effect transistor (7) via a series resistor (6), characterised in that further capacitors (4, 5) are connected in series with the first charging capacitor (3), one connection of these capacitors (5) being connected to the other connecting point of the triac (8), and in that the drain-source channel of the field-effect transistor (7) is arranged in parallel with the further capacitors (4, 5), and in that the gate of the field-effect transistor (7) is connected between the capacitors (4 and 5).

2. Drive circuit according to Claim 1, characterised in that the field-effect transistor is constructed as junction-gate field-effect transistor (JFET) or as insulated-gate field-effect transistor (MOSFET).

3. Drive circuit according to Claim 1 or 2, characterised in that the charging capacitor (3) is significantly greater than the series circuit of capacitors (4 and 5).

4. Drive circuit according to one of the preceding claims, characterised in that the capacitors (4 and 5) are approximately equally large.

**Revendications**

1. Circuit de commande à tension continue pour un triac (8) qui est branché en série sur une résistance de puissance (1) avec une tension d'alimentation ($U_N$) en parallèle, et un autre branchement en série relié au point de raccordement du triac (8), branchement qui comprend une résistance de charge (2) et un premier condensateur de charge (3) entre lesquels se trouve un diac (9) dont l'autre borne est reliée à l'entrée de commande du triac (8) et qui est appliquée par un circuit de commande à transistor à effet de champ (7) pour modifier l'angle de passage du courant du triac (8), la tension continue de commande étant appliquée à la porte du transistor à effet de champ (7) par une résistance intermédiaire (6}, circuit caractérisé en ce qu'en série sur un premier condensateur de charge (3), on a d'autres condensateurs (4, 5), une borne de ces condensateurs (5) étant reliée à un autre point de branchement du triac (8), et en parallèle aux autres condensateurs (4, 5), on a le canal drain-source du transistor à effet de champ (7) et la porte du transistor à effet de champ (7) est branchée entre les condensateurs (4, 5).

2. Circuit de commande selon la revendication 1, caractérisé en ce que le transistor à effet de champ est un transistor à effet de champ à couche de blocage (JFET) ou un transistor à effet de champ à couche isolante (MOSFET),

3. Circuit de commande selon la revendication 1 ou 2, caractérisé en ce que le condensateur de charge (3) est beaucoup plus grand que le montage en série des condensateurs (4 et 5).

4. Circuit de commande selon l'une des revendications précédentes, caractérisé en ce que les condensateurs (4, 5) sont sensiblement équivalents.